# EUROPEAN PATENT APPLICATION

(11) **EP 1 950 387 A1**
(43) Date of publication of application: **30.07.2008**
(21) Application number: 07101311.4
(22) Date of filing: 29.01.2007
(51) Int. Cl.: F01P 7/16, G05D 23/13

(54) **Thermostat valve**

(71) Applicant: Ford Global Technologies, LLC, Dearborn, MI 48126 (US)
(72) Inventor: Marandi, Sassan, 422 56 Hisings Backa (SE); Marklund, Per, 871 61 Härnösand (SE); Ryden, Olof, 430 31 Åsa (SE); Lönnqvist, Christian, 429 35 Kullavik (SE)
(74) Representative: Valea AB

(57) **Abstract**

The present invention relates to a thermostat valve (10). The valve (10) comprises a valve housing (12) with a valve chamber (14) extending along a longitudinal axis, wherein the chamber (14) is delimited by a first end wall (16) and a side wall (18) extending in a longitudinal direction (L), parallel to the longitudinal axis, from the first end wall (16). The side wall (18) further extends in a circumferential direction about the longitudinal axis, so as to circumferentially delimit the chamber (14).
The valve further comprises a control assembly (28) comprising a first cover means (30) and a second cover means (32). According to the invention, the second cover means (32) is constituted by a delimited disk (36) having a first disk dimension d_{disk1}) in a first disk extension, substantially parallel to a first portion (24) of the side wall (18) in the circumferential direction, of less than half of a smallest circumference of the side wall (18) at the location of the second opening (22).

## Description

### TECHNICAL FIELD

The present invention relates to a thermostat valve for a cooling system for an internal combustion engine. The valve comprises a valve housing with a valve chamber extending along a longitudinal axis, wherein the chamber is delimited by a first end wall and a side wall extending in a longitudinal direction, parallel to the longitudinal axis, from the first end wall. The side wall further extends in a circumferential direction about the longitudinal axis, so as to circumferentially delimit the chamber. The valve housing comprises: a first opening located in the first end wall; a second opening located in a first portion of the side wall, and a third opening located in a portion of the valve housing opposite of the first end wall.

The valve further comprises a control assembly located at least partially within the chamber. The control assembly comprises a first cover means and a second cover means and the control assembly is adapted to be regulated between a first end position and a second end position. In the first end position, the first cover means is located so as to hinder fluid communication between the first opening and the chamber and the second cover means is located so as to allow fluid communication between the second opening and the chamber. In the second end position, the second cover means is located so as to hinder fluid communication between the second opening and the chamber and the first cover means is located so as to allow fluid communication between the first opening and the chamber. The control assembly comprises a temperature sensitive controller adapted to control the control assembly between the two end positions.

### BACKGROUND OF THE INVENTION

Internal combustion engines of today are generally provided with a cooling system for regulating the temperature of the engine. A cooling system generally comprises at least one conduit through the engine, through which conduit a cooling medium, such as water, is allowed to flow and absorb at least some of the heat generated by the engine. Thus, the temperature of the cooling medium leaving a running engine is generally higher than the temperature of the cooling medium entering the engine. After passing through the engine, the cooling medium is typically guided to a radiator in which the temperature of the cooling medium is lowered by means of a heat exchanger.

However, internal combustions engines generally have an operating temperature range within which the engine works as most efficiently. Thus, when the engine is started, it is generally desired that the engine be heated to the aforementioned range as quickly as possible. In order to achieve this, the cooling medium, during an initial phase, is made to bypass the radiator and the heated cooling medium leaving the engine is thus directed back to the engine. Depending on the temperature of the cooling medium leaving the engine, a valve generally determines whether the cooling medium should be directed to the radiator, back to the engine, or a combination thereof. Valves of theses types are often referred to as thermostat valves and typically comprise a temperature-sensitive switch which directs the flow of the cooling medium depending on the temperature of the same.

An example of a thermostat valve is disclosed in US 6,244,516 B1, which valve comprises a tubular valve body and a temperature-sensitive switch for moving said tubular valve body. Furthermore, US 6,742,716 B1 discloses an example of a thermostat valve comprising a temperature-sensitive switch as well as an electric valve actuator.

However, a need remains for improved thermostat valves, particularly within the field of internal combustion engines for cars, in which field the weight and size of each component of the engine is important.

### SUMMARY OF THE INVENTION

A first object of the invention is to provide a thermostat valve, which provides an appropriately high flow of the cooling medium through the valve, particularly the flow towards the radiator.

A second object of the invention is to provide a compact thermostat valve.

A third object of the invention is to provide a thermostat valve with a low weight.

A fourth object of the invention is to provide a thermostat valve, having a valve housing which may be a unitary component.

A fifth object of the invention is to minimize the amount of material of the valve body of the thermostat valve in order to reduce the cost of the same.

At least one of the aforementioned objects is achieved by a thermostat valve as claimed in appended claim 1.

Thus, the invention relates to a thermostat valve for a cooling system for an internal combustion engine. The valve comprises a valve housing with a valve chamber extending along a longitudinal axis, wherein the chamber is delimited by a first end wall and a side wall extending in a longitudinal direction, parallel to the longitudinal axis, from the first end wall. The side wall further extends in a circumferential direction about the longitudinal axis, so as to circumferentially delimit the chamber. The valve housing comprises: a first opening located in the first end wall; a second opening located in a first portion of the side wall, and a third opening located in a portion of the valve housing opposite of the first end wall.

The valve further comprises a control assembly located at least partially within the chamber. The control assembly comprises a first cover means and a second cover means and the control assembly is adapted be regulated between a first end position and a second end position. In the first end position, the first cover means is located so as to hinder fluid communication between the first opening and the chamber and the second cover means is located so as to allow fluid communication between the second opening and the chamber. In the second end position, the second cover means is located so as to hinder fluid communication between the second opening and the chamber and the first cover means is located so as to allow fluid communication between the first opening and the chamber. The control assembly comprising a temperature sensitive controller adapted to control the control assembly between the two end positions.

According to the invention, the second cover means is constituted by a delimited disk having a first disk extension substantially parallel to the first portion of the side wall in the circumferential direction. The disk has a first disk dimension in the first disk extension of less than half of a smallest circumference of the side wall at the location of the second opening.

As used herein, the expression "delimited disk", relates to a structural member, the extensions of which in both the longitudinal and circumferential directions are limited and terminate in one or several edges and/or transits to one or several flanged portions, each flanged portion having an extension which substantially differs from the extension of the structural member adjacent to the flanged portion.

Using a thermostat valve pursuant to the invention, a compact thermostat valve may be obtained. Furthermore, due to the design of the second cover means and hence the control assembly, the control assembly may preferably be manufactured as a separate component which is subsequently attached to the valve housing.

According to a preferred embodiment of the invention, the second opening has a first opening dimension along the circumferential direction and the first disk dimension is less than 2 times, preferably less than 1.5 times, the first opening dimension.

Ensuring that the disk is not unnecessarily large with respect to the second opening implies that the material used for the second cover means is kept to a minimum, resulting in a light and sufficiently compact control assembly.

According to a further embodiment of the invention, the first portion of the side wall has a substantially planar extension in the circumferential direction. This facilitates the motion of the disk relative to the first portion of the side wall, as well as ensuring a proper seal of the second opening, which generally is the bypass opening, when the control assembly assumes the second end position.

According to another embodiment of the invention, the first portion of the side wall has a first portion dimension in the circumferential direction and the first disk dimension is greater than 0.8 times, preferably greater than 0.9 times, the first portion dimension. Thus, the disk may advantageously be guided by delimitations of the first portion of the side wall, which may ensure an appropriate displacement of the disk.

According to a further embodiment of the invention, the first portion of the side wall is provided with a plurality of rims. At least one of the rims extends substantially parallel to the longitudinal direction, for facilitating displacement of the disk.

According to another embodiment of the invention, at least one of the rims is located in the first portion of the side wall on a side of the second opening distal from the first end wall. The rim extends substantially parallel to the circumferential direction, for improving covering of the second opening when the control assembly is in the second end position.

According to a further embodiment of the invention, the second opening has a second opening dimension along the longitudinal direction and a second disk dimension in the longitudinal direction is less than 3 times, preferably less than 2 times, the second opening dimension. This ensures that the disk is kept as small as possible.

According to another embodiment of the invention, the control assembly further comprises a support member connected to the disk. The support member is located at a location of the chamber substantially diametrically opposed to the disk, for preventing the delimited disk from being warped when the control assembly is regulated between the two end positions.

According to a further embodiment of the invention, the support member and the disk are connected to one another by means of a cross-bar. Preferably, the support member, the disk and the cross-bar form a unitary component in order to facilitate production and mounting thereof.

According to a further embodiment of the invention, the control assembly is adapted to be continuously adjustable between the two end positions. Thus, a first flow may be directed to the radiator and a second flow may be directed back to the engine, which allows the engine to be heated to the aforementioned working temperature interval in a controlled manner.

According to another embodiment of the invention, the control assembly further comprises resilient means to ensure that the control assembly is in the first position when the temperature sensitive controller is in an inactive state. Furthermore, the temperature sensitive controller preferably comprises a heat expandable wax.

According to another embodiment of the invention, the control assembly is attached to the valve housing by means of a fastening means, connected to the housing by means of at least one cantilever.

According to a further embodiment of the invention, the valve housing comprises a fourth opening, adapted to receive a sensor, preferably a temperature sensor.

According to another embodiment of the invention, the valve housing is a unitary component. Thus, a valve housing which is easy to manufacture and which has a low weight and is small is obtainable.

A second aspect of the invention relates to a cooling system for an internal combustion engine, comprising a thermostat valve according to the present invention.

A third aspect of the invention relates to an internal combustion engine, comprising the aforementioned cooling system.

A fourth aspect of the invention relates to a vehicle, comprising the aforementioned internal combustion engine.

### BRIEF DESCRIPTION OF THE DRAWINGS

The present invention will hereinafter be further explained by means of non-limiting examples with reference to the appended figures wherein:
Fig. 1 is a cross sectional perspective view of an embodiment of the invention;
Fig. 2 is a partial cross sectional view of an embodiment of the invention;
Fig. 3 is a partial cross sectional view of a further embodiment of the invention;
Fig. 4 is a partial cross sectional view of an embodiment of the invention;
Fig. 5 is a cross sectional perspective view of an implementation of the valve housing of the thermostat valve of the invention,
Fig. 6 is a cross sectional perspective view of a preferred embodiment of the invention;
Fig. 7 is a cross sectional perspective view of the Fig. 6 embodiment, wherein the control assembly is in another position as compared to Fig. 6, and
Fig. 8 is an end view of the Fig. 6 and 7 embodiment.

### DETAILED DESCRIPTION OF PREFERRED EMBODIMENTS

The invention will, in the following, be exemplified by embodiments. It should however be realized that the embodiments are included in order to explain principles of the invention and not to limit the scope of the invention, defined by the appended claims.

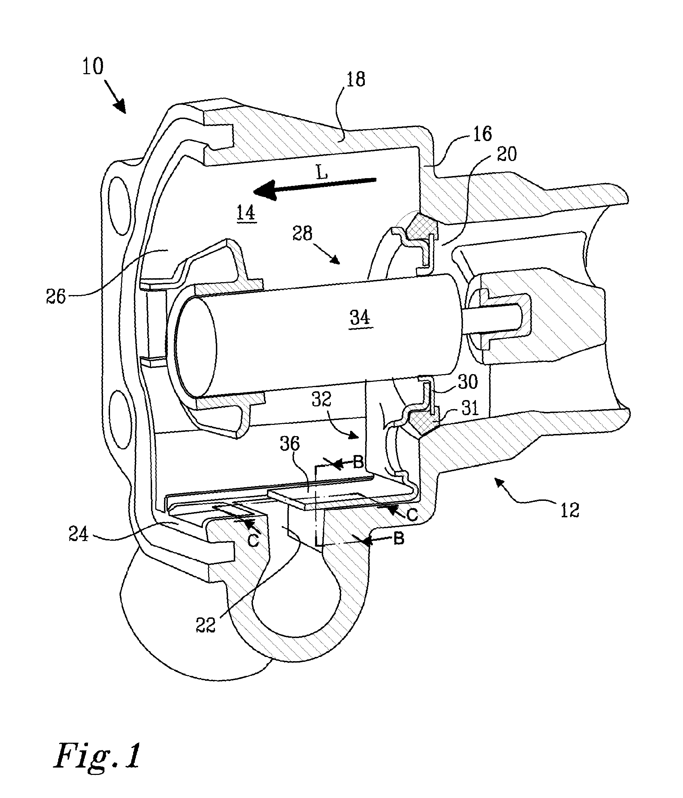

Fig. 1 illustrates a cross section of an embodiment of the thermostat valve 10 of the invention. The thermostat valve 10 is intended to be used in a cooling system (not shown) of an internal combustion engine. The valve 10 comprises a valve housing 12 with a valve chamber 14 extending along a longitudinal axis. The valve housing may preferably be made of a solid and heat durable material, such as metal, and may be a unitary component. The chamber 14 is delimited by a first end wall 16 and a side wall 18 extending in a longitudinal direction L, parallel to the longitudinal axis, from the first end wall 16. The side wall 18 further extends in a circumferential direction about the longitudinal axis, so as to circumferentially delimit the chamber 14. The valve housing further comprises: a first opening 20 located in the first end wall 16; a second opening 22 located in a first portion 24 of the side wall 18, and a third opening 26 located in a portion of the valve housing 12 opposite of the first end wall 16. In the embodiment illustrated in Fig. 1, the longitudinal direction is substantially rectilinear, but it also possible to provide a valve housing 12 wherein in the longitudinal direction has a curvature, for example.

As may be gleaned from Fig. 1, the valve 10 further comprises a control assembly 28 located at least partially within the chamber 14. The control assembly 28 comprises a first cover means 30 and a second cover means 32 and is adapted to be regulated between a first end position and a second end position. In the first end position, which is illustrated in Fig. 1, the first cover means 30 is located so as to hinder fluid communication between the first opening 20 and the chamber 14 and the second cover means 32 is located so as to allow fluid communication between the second opening 22 and the chamber 14. In the second end position, which is not shown in Fig. 1, the second cover means 32 is located so as to hinder fluid communication between the second opening 22 and the chamber 14 and the first cover means is located so as to allow fluid communication between the first opening 20 and the chamber 14. The control assembly 28 comprises a temperature sensitive controller 34, schematically illustrated in Fig. 1, adapted to control the control assembly 28 between the two end positions.

In a general application of the valve 10 disclosed in Fig. 1, the first opening 20 is connected to a radiator (not shown), the second opening 22 is connected to a coolant medium inlet (not shown) of the engine and the third opening 26 is connected to a coolant medium outlet (not shown) of the engine. Thus, coolant medium entering the valve through the third opening 26 will, depending on its temperature, be directed to either the radiator via the first opening 20, the engine via the second opening 22, or a combination thereof.

In Fig. 1, the first and second cover means 30, 32 are separate parts joined in the control assembly 28. However, it is of course possible that the first and second cover means 30, 32 form a unitary component. Furthermore, the Fig. 1 first cover means 30 is provided with a seal 31 in order to improve sealing of the first opening 20 when the control assembly 28 is in the first end position. However, in some applications, the seal 31 may instead be located in the valve housing 12 or may in some cases even be omitted. Obviously, some embodiments of the thermostat valve of the invention may comprise a seal (not shown) between the second cover means 32 and the first portion 24 of the side wall 18.

As may be gleaned from Fig. 1, the second cover means 32 is constituted by a delimited disk 36 having a first disk extension substantially parallel to the circumferential extension of the first portion 24 of the side wall 28. Furthermore, the disk 36 has a first disk dimension in the first disk extension of less than half of a smallest circumference of the side wall 18 at the location of the second opening 22.

The disk 36 illustrated in Fig. 1 is delimited by two longitudinal edges, of which only one is shown due to the cross section view, and one circumferentially extending edge which in Fig. 1 is located close to the second opening 22. Furthermore, the disk 36 is limited by a flanged portion located at a portion of the disk 36 closest to the first end wall 16. Obviously, the disk 36 could be designed in a plurality of ways in order to be delimited in the longitudinal and circumferential directions and could comprise additional or fewer edges or flanged portions. Purely by way of example, the disk 36 could have a semicircular shape (not shown) and hence be delimited by only one edge and one flanged portion.

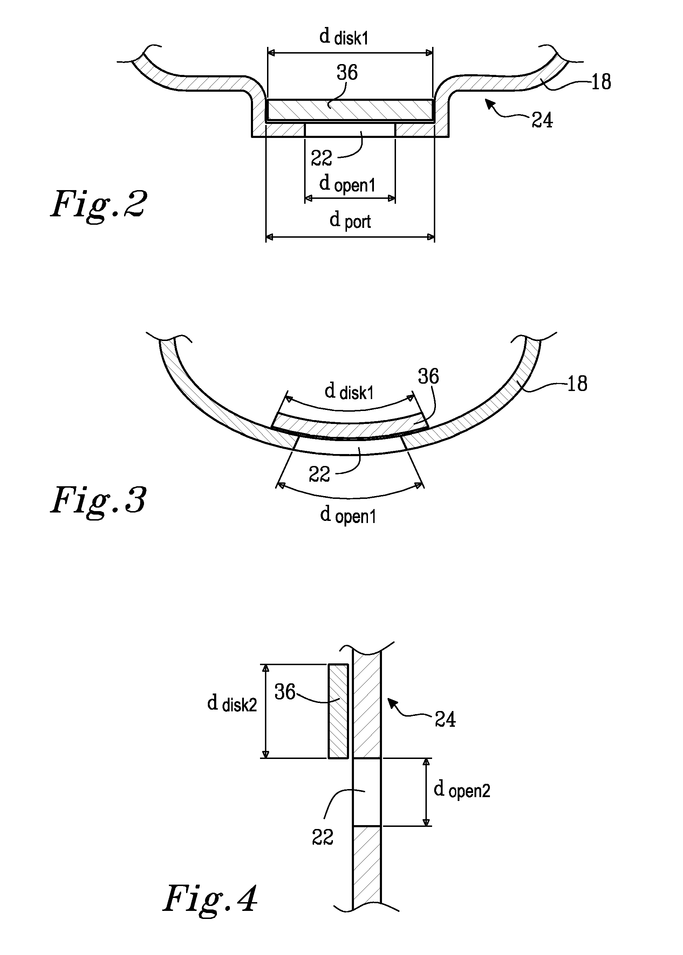

Depending on the application, the first portion 24 of the side wall 18 could be designed in a plurality of ways, as illustrated in Fig. 2 and 3. Fig. 2 illustrates a preferred embodiment of the invention, wherein the first portion 24 of the side wall 18 has a substantially planar extension in the circumferential direction. However, as illustrated in Fig. 3, the first portion 24 may instead have the shape of a circle segment.

Depending on the design of the valve housing 12 and the second opening 22, the first disk dimension may in some implementations preferably be much smaller than half of the smallest circumference of the side wall 18 at the location of the second opening 22 as long as the disk 36 is adapted to hinder fluid communication between the valve chamber and the second opening when the control assembly 28 is in the second end position. As such, implementations of the disk 36 is possible, wherein the first disk dimension is less that 0.3, and in some cases even less than 0.2, times the smallest circumference of the side wall 18 at the location of the second opening 22

However, both Fig. 2 and Fig. 3 illustrate a preferred implementation of the delimited disk 36, namely wherein the second opening 22 has a first opening dimension dₒₚₑₙ₁ along the circumferential direction and the first disk dimension d_{disk1} is less than 2 times, preferably less than 1.5 times, the first opening dimension dₒₚₑₙ₁. Fig. 2 furthermore illustrates a preferred implementation of the disk 36 and the first portion 24, wherein the first portion 24 of the side wall 18 has a first portion dimension dₚₒᵣₜ in the circumferential direction and the first disk dimension d_{disk1} is greater than 0.8 times, preferably greater than 0.9 times, the first portion dimension dₚₒᵣₜ. In the implementation illustrated in Fig. 2, the first disk dimension d_{disk1} is approximately 0.95 times the first port dimension dₚₒᵣₜ.

Furthermore, Fig. 4 illustrates a further preferred implementation of the disk 36, namely wherein the second opening 22 has a second opening dimension dₒₚₑₙ₂ along the longitudinal direction L and a second disk dimension d_{disk2} in the longitudinal direction L is less than 3 times, preferably less than 2 times, the second opening dimension dₒₚₑₙ₂. In the implementation of the disk 36 illustrated in Fig. 4 the second disk dimension d_{disk2} is approximately 1.4 times the second opening dimension dₒₚₑₙ₂.

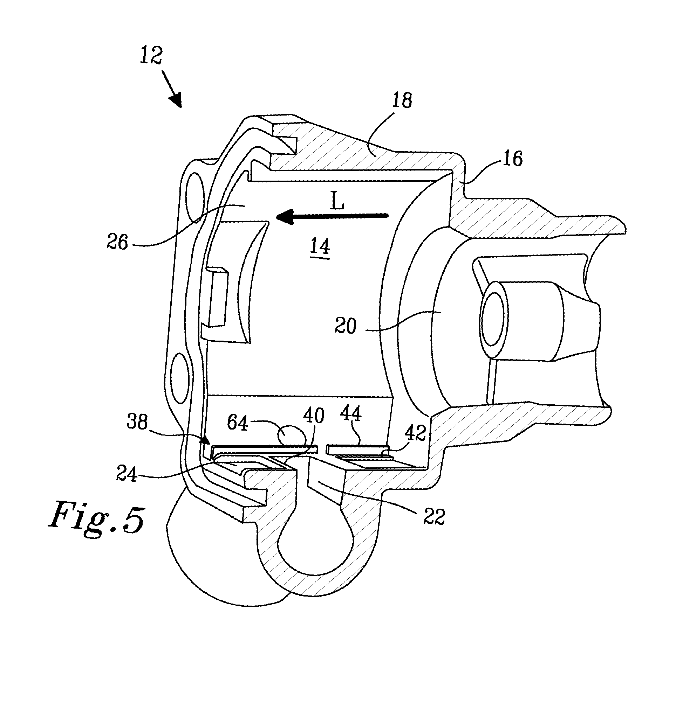

Fig. 5 illustrates a cross section of a preferred implementation of a valve housing 12 for the thermostat valve 10 of the invention. As may be gleaned from Fig. 5, the first portion 24 of the side wall 18 is provided with a plurality of rims 38, 40 and at least one 38 of the rims extends substantially parallel to the longitudinal direction L. As may be gleaned from Fig. 5, the rim 38 is constituted by two longitudinally extending protrusions 42, 44 wherein the first protrusion 42, being the one located closest to the second opening 22, is lower than the second 44. Thus, the first protrusion 42 is arranged to reduce the friction when the disk 36 (not shown in Fig. 5) moves between its end positions, and second protrusion 44 is arranged so as to ensure that the disk 36 moves in a longitudinal direction L.

Fig. 5 further illustrates a preferred implementation of the valve housing 12, namely that at least one of the rims 40 extends substantially parallel to the circumferential direction, for improving covering of the second opening when the control assembly 28 is in said second end position. Thus, when the disk 36 is located so as to hinder fluid communication between the chamber 14 and the second opening 22, an improved seal of the second opening is obtained by the rim 40.

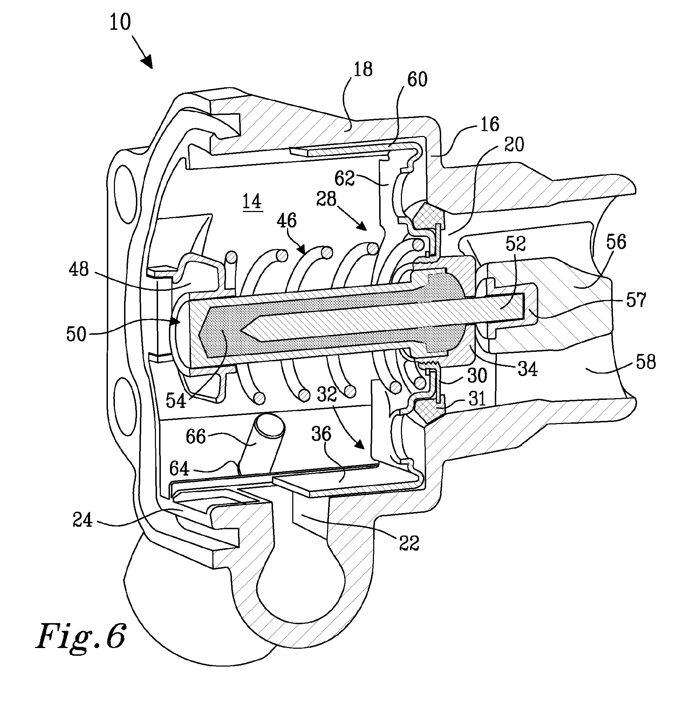

Fig. 6 illustrates a preferred implementation of the control assembly 28, particularly a preferred implementation of the temperature sensitive controller 34. As illustrated in Fig. 6, the control assembly 28 comprises resilient means 46, which in Fig. 6 is depicted as a helical spring constricted between a retention means 48 and the cover means 30, 32. The purpose of the resilient means 46 is to ensure that the control assembly 28 is in the first position when the temperature sensitive controller 34 is in an inactive state, i.e. for low temperatures of the coolant medium.

As further illustrated in Fig. 6, the temperature sensitive controller 34 comprises a tubular assembly 50, a shaft 52 which is partially arranged within the tubular assembly 50 and a heat expandable wax 54 accommodated in the space between the shaft 52 and the tubular assembly 50. Preferably, the control assembly 28 is attached to the valve housing 12 by means of a fastening means 56, connected to the housing 12 by means of at least one cantilever 58. In the Fig. 6 implementation of the control assembly 28, the fastening means 56 is connected to the valve housing 12 by means of three cantilevers 58, of which two are shown. Furthermore, the shaft 52 of the control assembly 28 is in Fig. 6 connected to the fastening means 56 through a sleeve 57. The control assembly illustrated in Fig. 6 is preferable since the whole assembly may be inserted through the third opening 26, which allows the valve housing 12 to be made as a unitary component, e.g. by means of casting.

When the thermostat valve 10 illustrated in Fig. 6 is in use, coolant medium will flow from the third opening 26, enter the valve chamber 14 and thus surround the tubular member 50. If the temperature of the coolant medium is low, the wax 54 within the tubular member 50 will remain in a solid state and the control assembly 28 will maintain the first end position, thus allowing the coolant medium to flow through the second opening 22 and hence to the coolant medium inlet of the engine.

However, as the temperature of the coolant medium flowing through the chamber 14 increases, the wax 54 will start to melt, resulting in a thermal expansion of the wax 54. The wax 54 will thus the force the shaft 52 out of the tubular member 50, but since the shaft 52 is attached to the fastening means 56, the tubular member 50 will instead move towards the third opening 26, i.e. move substantially in the longitudinal extension L. Since the first and second cover means 30, 32 are attached to the tubular member 50, they will follow the displacement towards the third opening 26.

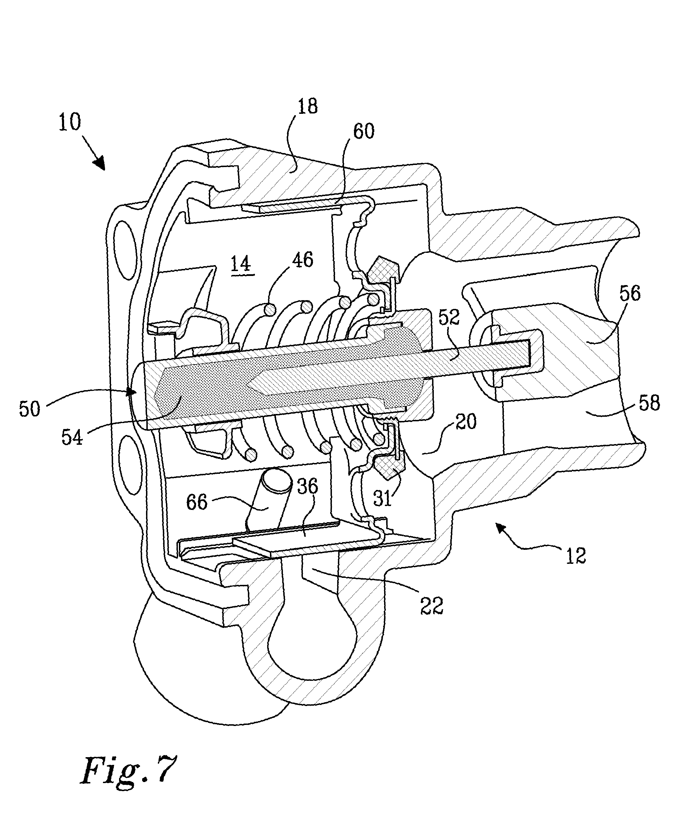

When the coolant medium entering the chamber through the third opening 26 has a temperature above a threshold value, the thermal expansion of the wax 54 has reached an upper limit and the control assembly assumes the second end position as illustrated in Fig. 7, wherein the cooling medium is allowed to flow from the third opening 26 to the first opening 20 and subsequently to the radiator (not shown). In other words, the second opening 22 has been sealed axially, i.e. longitudinally. However, before the temperature of the cooling medium has reached the aforementioned threshold value, the control assembly may assume a position which is in-between the two end positions, thus allowing flow through both the first and second openings 20, 22, i.e. the temperature sensitive controller 34 may control the control assembly 28 so as to be continuously adjustable between the two end positions.

Fig. 6 illustrates a preferred implementation of the control assembly 28, wherein the control assembly 28 further comprises a support member 60 connected to the disk 36. The support member is located at a location of the chamber 14 substantially diametrically opposed to the disk 36, for preventing the delimited disk 36 from being warped when the control assembly is regulated between the two end positions. Preferably, the support member 60 and the disk 36 are connected to one another by means of a cross-bar 62. The cross bar 62 disclosed in Fig. 6 is designed so as to allow an appropriate flow towards the first opening 20, when the control assembly 28 is in the second end position.
Fig. 6 further illustrates that the support member 60, the disk 36 and the cross-bar 62 form a unitary component. Optionally, the first cover means could be included in this unitary component.

Fig. 6 further illustrates that the valve housing 12 comprises a fourth opening 64, adapted to receive a sensor 66, which in the Fig. 6 embodiment is a temperature sensor. The location of the sensor 66 is enabled due to the design of the disk 36 in accordance with the invention.

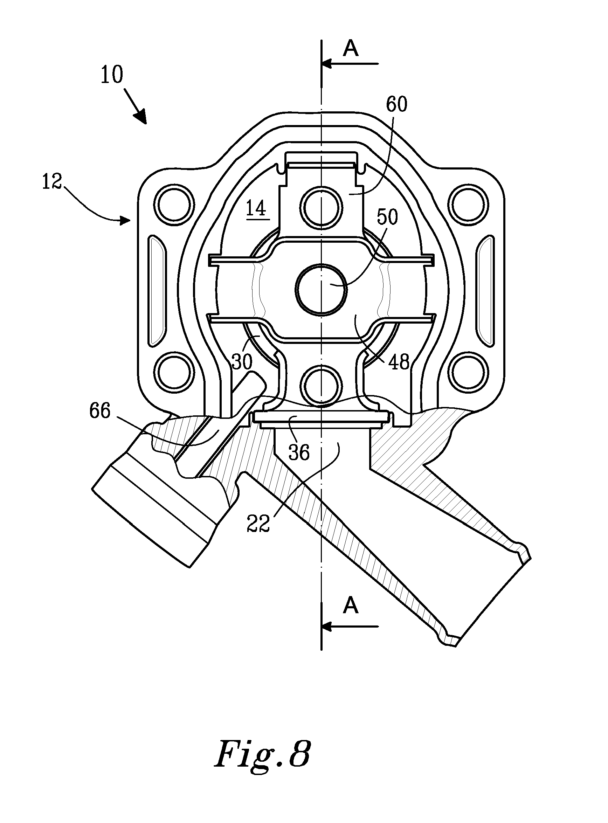

Finally, Fig. 8 illustrates an end view of the Fig. 6 and 7 embodiment of the invention, as seen from the third opening 26.

Further modifications of the invention within the scope of the appended claims are feasible. For instance, the temperature sensitive controller 34 may comprise an electric valve actuator adapted to regulate the control assembly 28 in response to the temperature measured by the temperature sensor 66.

## Claims

1. A thermostat valve (10) for a cooling system for an internal combustion engine, said valve (10) comprising a valve housing (12) with a valve chamber (14) extending along a longitudinal axis, said chamber (14) being delimited by a first end wall (16) and a side wall (18) extending in a longitudinal direction (L), parallel to said longitudinal axis, from said first end wall (16), said side wall (18) further extending in a circumferential direction about said longitudinal axis, so as to circumferentially delimit said chamber (14), said valve housing (12) further comprising: a first opening (20) located in said first end wall (16); a second opening (22) located in a first portion (24) of said side wall (28), and a third opening (26) located in a portion of said valve housing (12) opposite of said first end wall (16),
said valve (10) further comprising a control assembly (28) located at least partially within said chamber (14), said control assembly (28) comprising a first cover means (30) and a second cover means (32), said control assembly (28) being adapted to be regulated between a first end position and a second end position, in the first end position, the first cover means (30) is located so as to hinder fluid communication between said first opening (20) and said chamber (14) and the second cover means (32) is located so as to allow fluid communication between said second opening (22) and said chamber (14), and in the second end position, the second cover means (32) is located so as to hinder fluid communication between said second opening (22) and said chamber (14) and the first cover means (30) is located so as to allow fluid communication between said first opening (20) and said chamber (14), the control assembly comprising a temperature sensitive controller (34) adapted to control said control assembly (28) between said two end positions,
**characterized in that**
said second cover means (32) is constituted by a delimited disk (36) having a first disk extension substantially parallel to said first portion (24) of said side wall (18) in said circumferential direction, said disk having a first disk dimension (d_{disk1}) in said first disk extension of less than half of a smallest circumference of said side wall (18) at said location of said second opening (22).

2. The thermostat valve (10) according to claim 1, wherein said second opening (22) has a first opening dimension (dₒₚₑₙ₁) along said circumferential direction and said first disk dimension (d_{disk1}) is less than 2 times, preferably less than 1.5 times, said first opening dimension (dₒₚₑₙ₁).

3. The thermostat valve (10) according to claim 1 or 2, wherein said first portion (24) of said side wall (18) has a substantially planar extension in said circumferential direction.

4. The thermostat valve (10) according to claim 3, wherein said first portion (24) of said side wall (18) has a first portion dimension (dₚₒᵣₜ₁) in said circumferential direction and said first disk dimension (d_{disk1}) is greater than 0.8 times, preferably greater than 0.9 times, said first portion dimension (dₚₒᵣₜ₁).

5. The thermostat valve (10) according to any one of claims 1 to 4, wherein said first portion (24) of said side wall (18) is provided with a plurality of rims (38, 40), at least one of said rims (38, 40) extending substantially parallel to said longitudinal direction (L), for facilitating displacement of said disk (36).

6. The thermostat valve (10) according to claim 5, wherein at least one of said rims (40) is located in said first portion (24) of said side wall (18) on a side of said second opening (22) distal from said first end wall (16), said rim (40) extending substantially parallel to said circumferential direction, for improving covering of said second opening (22) when said control assembly (28) is in said second end position.

7. The thermostat valve (10) according to any one of the preceding claims, wherein said second opening (22) has a second opening dimension (dₒₚₑₙ₂) along said longitudinal direction and a second disk dimension (d_{disk2}) in said longitudinal direction is less than 3 times, preferably less than 2 times, said second opening dimension (dₒₚₑₙ₂).

8. The thermostat valve (10) according to any one of the preceding claims, wherein said control assembly (28) further comprises a support member (60) connected to said disk (36), said support member (60) being located at a location of said chamber (14) substantially diametrically opposed to said disk (36), for preventing said delimited disk (36) from being warped when said control assembly is regulated between said two end positions.

9. The thermostat valve (10) according to claim 8, wherein said support member (60) and said disk (36) are connected to one another by means of a cross-bar (62).

10. The thermostat valve (10) according to claim 9, wherein said support member (60), said disk (36) and said cross-bar (62) form a unitary component.

11. The thermostat valve (10) according to any one of the preceding claims, wherein said control assembly (28) is adapted to be continuously adjustable between said two end positions.

12. The thermostat valve (10) according to any one of the preceding claims, wherein said control assembly further comprises resilient means (46) to ensure that said control assembly is in said first position when said temperature sensitive controller is in an inactive state.

13. The thermostat valve (10) according to any one of the preceding claims, wherein said temperature sensitive controller (34) comprises a heat expandable wax (54).

14. The thermostat valve (10) according to any one of the preceding claims, wherein said control assembly (28) is attached to said valve housing (12) by means of a fastening means (56), connected to said housing (12) by means of at least one cantilever (58).

15. The thermostat valve (10) according to any one of the preceding claims, wherein said valve housing (12) comprises a fourth opening (64), adapted to receive a sensor (66), preferably a temperature sensor.

16. The thermostat valve (10) according to any one of the preceding claims, wherein said valve housing (12) is a unitary component.

17. A cooling system for an internal combustion engine, comprising a thermostat valve (10) according to any one of the preceding claims.

18. An internal combustion engine, comprising a cooling system according to claim 17.

19. A vehicle, comprising an internal combustion engine according to claim 18.
